# EUROPEAN PATENT APPLICATION

(11) **EP 4 159 302 A1**
(43) Date of publication of application: **05.04.2023**
(21) Application number: 21200204.2
(22) Date of filing: 30.09.2021
(51) Int. Cl.: B01D 61/02, B01D 61/14, B01D 67/00, B01D 69/02, B01D 69/12, B01D 71/34, B01D 71/68

(54) **COMPOSITE FILTER MEMBRANES PROVIDING INCREASED FLOWABILITY**

(71) Applicant: VITO NV, 2400 Mol (BE)
(72) Inventor: MOLENBERGHS, Bart, 2400 Mol (BE); BOUWMAN, Bert, 2400 Mol (BE)
(74) Representative: Arnold & Siedsma

(57) **Abstract**

The present invention relates to the field of composite membranes. More specifically, the present invention relates to a composite filter membrane comprising: a filtration layer, a support layer comprising at least one through-hole; and an intermediate layer sandwiched between said filtration layer and said support layer.

## Description

### FIELD OF THE INVENTION

The present invention relates to improvements in the field of composite filter membranes. More specifically, the present invention relates to supported composite filter membranes provided with a series of ducts, a method of manufacturing thereof, and the use of said composite filter membranes.

### BACKGROUND TO THE INVENTION

Polymeric filter membranes are typically supported by a support layer, which allows the filtration layer of said filter membrane to be mechanically strengthened. The filtration layer of such filter membranes often has a poor mechanical strength. This is even truer for thin filtration layers, i.e. having a thickness smaller than 200 µm. The filter membrane is typically bonded to the support by mechanical anchoring. Solutions of this kind are known from EP0662341, EP1462154 and JP2009045559. Further, filter membranes wherein the filtration layer is chemically bound to the support layer are known from WO15140355.

WO15140355 describes membranes comprising a support layer with a plurality of holes, and a filtration layer chemically bound to the support layer. Further, the membranes described in WO15140355 are characterized by the presence of evacuation channels underneath the support layer. Even though the presence of said channels provides for an improved drainage of the liquid filtrated, the flowability of the membrane is much constrained by the dimension and position of said plurality of holes on the support layer, which bottleneck the transfer of said liquid. A drawback the membrane described in WO15140355 is that the support layer needs a high open surface area (OSA), in the range of at least 10% and up to 60%, in order to allow a sufficient flowability. This has the disadvantage that the support layer is weakened in its structural integrity. Further, this also affects the available surface for bonding of the filtration layer to the support layer which is required for the backwashability of the membranes.

Therefore, even though the advancements in the field of filter membranes have provided for improved composite filter membranes, there is the need to provide for membranes having higher flowability whilst retaining the possibility of allowing backwashing, and to overcome other disadvantages of the prior art.

### SUMMARY OF THE INVENTION

It is an object of the present invention to provide for filter membranes avoiding at least part of the drawbacks of the prior art. It is a further object of the present invention to provide filter membranes allowing for improved characteristics, e.g. higher flowability, improved structural integrity, and backwashability.

In a first aspect, the present invention pertains to a composite filter membrane comprising:
- a filtration layer made from a semipermeable first polymeric material, allowing a flow of a liquid to pass through;
- a support layer made from a second polymeric material different from the first polymeric material, and comprising at least one through-hole, which is provided to evacuate the flow of liquid; and
- an intermediate layer,
- wherein the intermediate layer is made from the first polymeric material and sandwiched between the filtration layer and the support layer, and therefore laid above the support layer, but under the filtration layer, which intermediate layer is solvent bonded to the support layer, and is provided with a series of ducts (one or more ducts) which is connected to the at least one through-hole, preferably more, of the support layer. In other words, the series of ducts is provided with one or more openings connected to at least one opening of the at least one through-hole, thereby allowing a flow of a liquid to pass through the filtration layer, the intermediate layer and the support layer via said series of ducts. In other words, the series of ducts allows for a flow of a liquid to exit the semipermeable filtration layer, be collected within said series of ducts and be conveyed to the at least one through-hole, where the flow is evacuated. In other words, the a series of ducts is connected to the at least one through-hole of the support layer and wherein said series of ducts is configured for evacuation of a liquid flow, passing through the filtration layer and the intermediate layer, through said at least one through-hole of the support layer.

In a second aspect, the present invention pertains to a method of manufacturing a composite filter membrane as in accordance with the present invention, comprising the following subsequent steps of:
(a) providing a support layer (3) having at least one through-hole (4); (b) providing a layer of duct forming material, which is a material adapted to form the series of ducts by e.g. dissolution, on the support layer made of a second polymeric material, in a configuration partially covering the overall surface of the support layer and at least covering the at least one through-hole present in said support layer (so that at least one opening of the duct is connected to the at least one through-hole); (c) providing a layer of filtration layer forming material over the layer of duct forming material provided at step (b); (d) solvent bonding, by means of a first solvent, the support layer and the layer of filtration layer forming material provided at step (c) causing adhesion of said support layer to said layer of filtration layer forming material, thereby forming a filtration layer (2); and (e) dissolving, at least partially, by means of a second solvent, the duct forming material thereby forming an intermediate layer made of the first polymeric material having a series of ducts, which is solvent bonded to the support layer.

According to an embodiment of the present invention, step (b) comprises the steps:
(c1) providing a filtration layer dope over the layer of duct forming material; (c2) rigidifying e.g. by means of phase-inversion the filtration layer dope provided at step (c1) by means of a third solvent, thereby providing the filtration layer.

According to an embodiment of the present invention, the method comprises:
(c) providing a layer of filtration layer forming material comprising a filler material, the filler material preferably selected from one or a combination of: hydroxypropylcellulose (HPC), carboxymethylcellulose (CMC), polyvinyl pyrrolidone (PVP), cross-linked polyvinyl pyrrolidone (PVPP), polyvinyl alcohol (PVA), polyvinyl acetate (PVAc), polyethylene oxide (PEO), polyethylene glycol (PEG), and glycerol; (f) dissolving, by means of a fourth solvent, the filler material comprised in the filtration layer.

According to an embodiment of the present invention, at step (a) the layer of duct forming material is provided to cover the support layer with a specific coverage of the support layer from about 10% to about 75%; in particular from about 20% to about 50%.

In a third aspect, the present invention pertains to the use of the composite filter membrane as defined according to the present invention as a filtration membrane in the wastewater treatment industry, preferably as membrane in an MBR (Membrane Bioreactor).

### BRIEF DESCRIPTION OF THE DRAWINGS

With specific reference now to the figures, it is emphasized that the particulars shown are by way of example and for purposes of illustrative discussion of the different embodiments of the present invention only. They are presented in the cause of providing what is believed to be the most useful and readily description of the principles and conceptual aspects of the invention. In this regard no attempt is made to show structural details of the invention in more detail than is necessary for a fundamental understanding of the invention. The description taken with the drawings making apparent to those skilled in the art how the several forms of the invention may be embodied in practice.
**Figure 1****,** also abbreviated as **Fig. 1**, illustrates a cut-section rendering of composite filter membrane wherein the filtration layer is cut so to expose the series of ducts left by the intermediate layer.
**Figure 2****,** also abbreviated as **Fig. 2**, illustrates a possible duct forming material in accordance with the present invention, wherein the duct forming material is a PVA web, providing for a 50% specific coverage of the support layer.
**Figure 3****,** also abbreviated as **Fig. 3****,** exemplifies how a composite filter membrane in accordance with the present invention can be manufactured in a roll-to-plate production line.
**Figure 4****,** also abbreviated as **Fig. 4****,** illustrates a cross section of a composite filter membrane in accordance with the present invention.
**Figure 5A****,** also abbreviated as **Fig. 5A****,** illustrates the drilling of the support layer of the composite filter membrane shown in **Fig. 4****.** **Figure 5B****,** also abbreviated as **Fig. 5B****,** illustrates the support layer of the composite filter membrane shown in **Fig. 4****,** wherein each adjacent through-hole is equidistant and displaced on said support layer according to a grid pattern. A zoom in of said through-holes is provided.
**Figure 6A****,** also abbreviated as **Fig. 6A****,** illustrates the duct forming material utilized for the formation of ducts in the composite filter membrane shown in **Fig. 4****,** wherein the duct forming material is a PVA web providing for a 35% specific coverage of the support layer. A zoom in of the web is provided. **Figure 6B****,** also abbreviated as **Fig. 6B****,** illustrates a further zoom in of the zoom in depicted in the lower part of **Fig. 6A****.**

### DETAILED DESCRIPTION OF THE INVENTION

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous. When describing the compounds of the invention, the terms used are to be construed in accordance with the following definitions, unless a context dictates otherwise. The term "about" or "approximately" as used herein when referring to a measurable value such as a parameter, an amount, a temporal duration, and the like, is meant to encompass variations of +/-10% or less, preferably +/-5% or less, more preferably +/- 1 % or less, and still more preferably +/-0,1 % or less of and from the specified value, insofar such variations are appropriate to perform in the disclosed invention. It is to be understood that the value to which the modifier "about" or "approximately" refers is itself also specifically, and preferably, disclosed. As used in the specification and the appended claims, the singular forms "a", "an", and "the" include plural referents unless the context clearly dictates otherwise. By way of example, "a compound" means one compound or more than one compound.

In the context of the present invention, by means of the term "layer", reference is made to a level or sheet of an object that is different, e.g. physically and/or chemically, from the object or level or sheet above or below it. In other words, reference is made to a sheet of a substance, that is different from the substance above or below it.

In the context of the present invention, by means of the term "filtration layer", reference is made to a layer that is capable of removing/separating a phase of matter from another phase of matter e.g. removing solids from liquids or gases. Therefore, the filtration layer in accordance with the present invention is semipermeable, thereby allowing e.g. a liquid or gas to pass from a first side of the filtration layer to a second side, thereby, in case of solid-liquid mixtures, allowing at least partial separation of the solid phase from said liquid phase. By means of "layer of filtration layer forming material", reference is made to a layer made of a material providing a filtration layer after solvent bonding with the support layer. The filtration layer forming material is made of a first polymeric material or a filtration layer dope providing for said first polymeric material, the intermediate layer is also made of.

In the context of the present invention, by means of the term "support layer", reference is made to a layer that is provided to mechanically support another layer. Generally, the support layer is made of a stiffer material to counteract deformation of an attached layer.

In the context of the present invention, by means of the term "intermediate layer", reference is made to a layer located in between the support layer and the filtration layer.

In the context of the present invention, by means of the term "specific coverage", reference is made to the coverage of the support layer by the duct forming material where the duct forming material, e.g. a mesh like duct forming material, is in contact with the support layer, wherein the specific coverage is expressed in percentage values. In other words, the specific coverage is the area where the filtration layer, either a filtration layer dope or an already provided filtration layer, cannot reach the support layer and thereby no entanglement can take place. For example, in case a filtration layer dope is used to cover the duct forming material on top of the support layer, the specific coverage is the percentage of area of total support layer area which is not wet by the filtration layer dope, and is therefore under the solid duct forming material.

In the context of the present invention, by means of the term "open surface area" or OSA, reference is made to the area of the through-holes relative to the total area of the support layer (including the through-holes), expressed in percentage values.

In the context of the present invention, by means of the term "through-hole", reference is made to an opening in an object, which usually extends from one surface of the object through the thickness of that object. In the context of the present invention, at least one through-hole is provided in the support layer, meaning that an at least one opening is provided in said support layer which extends through the thickness of said support layer, i.e. connecting opposite surfaces of the support layer. May extend orthogonal to or at an angle with respect to the opposite surfaces of the support layer.

In the context of the present invention, by means of the term "series of ducts", reference is made to one duct, two ducts or a plurality of ducts e.g. three or more ducts. In the context of the present invention, by means of the term "diameter of a duct of the series of ducts", reference is made to the diameter of the circular cross section of a duct, wherein the cross section is taken perpendicular to the longest dimension of said duct. It is apparent that due to the ducts being formed by leaching a duct forming material, the maximal diameter of a duct of the series of ducts is equal to the diameter of the wires the duct forming material is made of. In the context of the present invention, by means of the term "intersecting ducts", reference is made to at least two ducts which intersect so to provide for a common space of said ducts. In the context of the present invention, by means of the term "duct forming material", reference is made to a layer of material which provides for to the formation of ducts in the composite filter membrane.

In the context of the present invention, by means of the term "pattern", or "pattern configuration" reference is made to a any regularly repeated arrangement, especially a design made from repeated e.g. lines, shapes, on a surface.

In the context of the present invention, by means of the term "hydrophilic filler material", reference is made to material whose interactions with water and other polar substances are more thermodynamically favourable than their interactions with oil or other hydrophobic or apolar solvents.

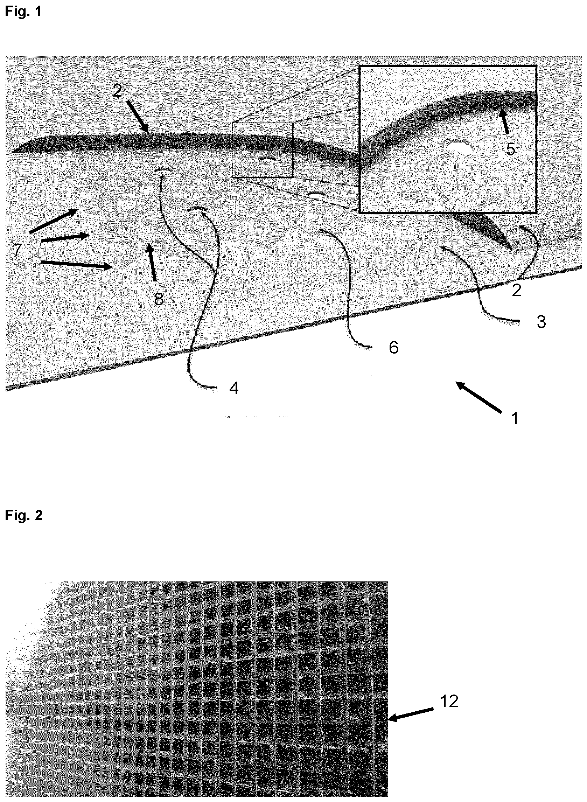

**Fig. 1** illustrates a composite filter membrane (1) in accordance with an embodiment of the present invention. Fig. 1 illustrates A composite filter membrane (1) comprising: a filtration layer (2) made from a semipermeable first polymeric material; a support layer (3) made from a second polymeric material different from the first polymeric material, and comprising at least one through-hole (4); and an intermediate layer (5), wherein the intermediate layer (5); is made from the first polymeric material and sandwiched between the filtration layer (2) and the support layer (3), and is solvent bonded to the support layer (3), and is provided with a series of ducts (7) connected to the at least one through-hole (4) of the support layer (3) and wherein said series of ducts (7) is configured for evacuation of a liquid flow, passing through the filtration layer (2) and the intermediate layer (5), through said at least one through-hole (4) of the support layer (3). The intermediate layer (5) inherently only partially cover the support layer (3) due to the presence of ducts (7) within the support layer (3), thereby providing for lack of contact at the location of said ducts with the support layer (3) surface. As illustrated in Fig. 1, a plurality of through-holes is present. Preferably, more than one through-hole is comprised in the support layer, nevertheless, only at least one through-hole is needed. Further, Fig. 1 also illustrates a series of ducts (7), which are present in between the filtration layer (2) and the support layer (3). In accordance with the present invention, the series of ducts (7) can comprise one or more ducts. The series of ducts (7) depicted in Fig. 1 comprises a plurality of ducts, all parallel to each other, wherein at least one of those ducts connects the filtration layer (2) with the at least one through-hole (4) of the support layer (3), meaning that a phase being filtrated by the composite filter membrane (1) is provided to pass through the filtration layer (2), be evacuated by said series of ducts (7), and conducted by said series of ducts (7) to the at least one through-hole present in the support layer (3). In other words, said series of ducts is connected to the at least one through-hole (4), thereby allowing the formation of a passage allowing a liquid or gas to flow from one side of the composite membrane according to the present invention (e.g. the side exposing the filtration layer (2)), to another side of the membrane (e.g. the side exposing the support layer (3)), and vice-versa. For example, in case the membrane according to the present invention is used to separate a solid-liquid mixture, the solid liquid mixture is contacted with the side of the membrane exposing the filtration layer (2), which being semipermeable, would allow liquid to first flow through the filtration layer (2), from there to flow through the ducts being present within the intermediate layer (5), and from the ducts (7) to flow through the at least one through-hole (4) present within the support layer (3), the flow thereby exiting the composite membrane at the side of the composite membrane (1) exposing the support layer (3). In Fig. 1, the filtration layer (2) is made from a semipermeable first polymeric material, whereas the support layer (3) is made from a second polymeric material different from the first polymeric material, which support layer (3) comprises at least one through-hole (4); and the intermediate layer (5) is made from the first polymeric material (same material as the filtration layer (2)).

The series of ducts (7) can be obtained by means of a duct forming material (12) sandwiched in between the support layer (3) and the filtration layer (2), wherein the material of the duct forming material is at least partially leached out so obtain a series of ducts (7) at the location of said duct forming material (12).

By introducing an intermediate layer (5) comprising a series of ducts in the composite filter membrane (1), it becomes possible to reduce the number of through-holes (4) in the support layer (3), this brings several advantages. First, as it is possible to reduce the number of through-holes (4) in the support layer, less machining would be required to provide for the support layers (4), leading to reduced manufacturing time and associated costs. Second, due to the fact that less through-holes (4) have to be present onto the support layer (3) for providing the same flowability of filter membranes in the state of the art, the strength and stiffness of the membrane can be maintained. Third, the flowability and/or pressure drop provided by existing filtration layers (2) can be improved by the use of intermediate layers (5) according to the present invention. In other words, with the same number of through-holes (4), the presence of a series of ducts (7) sandwiched between the filtration layer (2) and the support layer (3) can allow for higher flowability and a lower pressure drop compared to membranes not having said series of ducts (7). Fourth, the presence of said series of ducts (7) preferably parallel to the support layer (3) provides for an improved horizontal flow of filtrate and a more homogeneous distribution of filtrate above the support layer (3), this being also beneficial to achieved pressure drop and/or flowability. Fifth, with less through-holes in the support layer, the binding between the support layer and the filtration layer can be stronger as more binding surface is available, thus enhancing the backwash ability of the composite filter membranes according to the invention. The filtration layer (2), the support layer (3), the intermediate layer (5) and the duct forming material (12) and other embodiments and aspects of the present invention are further described here below.

### Filtration Layer

The filtration layer (2) as referred to in the present description refers to a layer or film of a solid made of a first polymeric material, which is continuous and having a structure allowing one or more components to be selectively transported through it. In other words, the filtration layer is semipermeable. The filtration layer (2) is preferably a filtration membrane. Filtration layers (2) as used in the present description enable to separate one or more compounds from a feed, which can be liquid or gaseous, and to transport them through the filtration layer (2), e.g. to a place where they can be collected. The filtration layer (2) is a semi-permeable membrane. A filtration layer (2) can feature a determined permeability for the one or more compounds. The perm-selectivity can be determined by all kinds of separation mechanisms, such as but not limited to, a characteristic pore size of the filtration layer (2) (e.g. microporous or nano-porous filtration membranes), or by a characteristic attraction of specific charge types (e.g. an ion exchange membrane).

In a specific embodiment of the present invention, the filtration layer (2) has a thickness in the range from about 5µm to 900µm, preferably in the range from 100µm to 500µm.

In accordance with the present invention, the filtration layer (2) is made of a first polymeric material comprising at least a first polymer (10). In a further embodiment of the present invention, the first polymer (10) is a compound being one or a blend of two or more of the group comprising: polysulfone, polyethersulfone, polyvinylidene fluoride, polyvinylidene chloride, polyvinyl chloride, chlorinated polyvinyl chloride, chlorinated polyethylene, polyaryletherketone, polyether ether ketone, sulfonated polyether ether ketone, polychlorotrifluoroethene, polyether imide, polyimide, polyamide imide, polyacrylonitrile, polyurethane, polyphenylene sulphide, cellulose acetate, cellulose triacetate, a grafted variant of any of these polymers, and a copolymer of any of these polymers. The amount of first polymer (10) compound in the (dry) (final) filtration layer (2) is advantageously at least 5% by weight, advantageously at least 10% by weight, advantageously at least 25% by weight, advantageously at least 35% by weight, advantageously at least 50% by weight.

The filtration layers (2) are advantageously high polymer content membranes, which refers to filtration layers (2) obtained through phase separation using a membrane forming solution, also referred to as filtration layer (2) dope, with a ratio of polymer content to solvent content of at least 0,15 by weight, advantageously at least 0,20 by weight, advantageously at least 0,25 by weight and advantageously not exceeding 0,50 by weight.

The thickness of the filtration layer (2) and the intermediate layer (5) may vary within wide ranges and will usually depend on the type of application for which the composite membrane is intended to be used. Possibly, the thickness of the membrane layer should be as thin as possible. Nevertheless, a thicker filtration layer (2) may be desirable in some applications e.g. membranes with high flux. Where use is made of a membrane with a high flux a high filtrate draining capacity may be desirable. This may be achieved by the presence of a series of ducts (7) in the intermediate layer (5) which is sufficiently large to accommodate the required capacity. To achieve this, the diameter of a duct can be increased. In doing so, the thickness of the filtration layer (2) shall be also advantageously increased.

The filtration layers (2) according to the present invention can be obtained by subjecting a polymer solution to a phase separation process. Phase separation, which is also referred to as phase inversion, is a well-known process wherein demixing between the polymer and the solvent is induced. As a result of demixing, the polymer precipitates, thereby forming a membrane lattice with a desired structure (pore size, pore structure, etc.). Further process steps can be carried out in order to remove the solvent completely (e.g., washing in a possibly hot water bath) and to obtain a final pore structure (e.g., removing pore formers by washing in a bleach solution). Demixing can be induced based on several techniques. One possibility is thermally induced phase separation (TIPS), wherein demixing is induced by a temperature change at the interface of the polymer solution. Another possibility is to induce a chemical reaction in the polymer solution, causing demixing. This is referred to as reaction induced phase separation (RIPS). However, in the vast majority of cases, demixing is induced by phase diffusion. The polymer solution is contacted with another phase, being a liquid (liquid induced phase separation or LIPS), or a gas (vapour, referred to as vapour induced phase separation or VIPS), which is a non- solvent of the polymer but which is miscible with the solvent of the polymer solution. The liquid or vapour will diffuse through the polymer solution and cause a local change in the polymer solution composition, inducing demixing. As a result, the polymer precipitates from the solution. LIPS is also referred to as immersion precipitation. It will be convenient to note that any phase separation process can be applied to prepare the filtration layers (2) as described herein. Wherein in the present description of the invention reference is made to "rigidify/rigidifying the filtration layer (2) dope", reference is made to the act of formation of membrane per se, by precipitation of the polymer by phase separation with a solvent.

In accordance with a particular embodiment of the present invention, the filtration layer (2) is at least partly made from a first polymer (10) which is a filtration layer (2) dope, which has to be rigidified. The filtration layer (2) dope is rigidified by means of a solvent, which has to be contacted with said filtration layer (2) dope. In a particular embodiment the filtration layer (2) is a filtration layer (2) dope consisting of Polyvinylideenfluoride (PVDF) and N-methylpyrrolidon (NMP) or N-Ethylpyrrolidone (NEP), wherein NMP or NEP are the solvents used in the phase separation process.

In case the filtration layer (2) is obtained by means of a phase separation process, a filtration layer (2) in liquid form (filtration layer (2) dope) is poured on top of the duct forming material (12). The phase separation process is then started by contacting the filtration layer (2) dope with a solvent, that rigidifies the dope. This implies that the materials used in the duct forming material (12) should be compatible and not interfere with the phase separation process, and more in particular with the solvent used in said process. This primarily requires resistance of the duct forming material (12) with the solvent used in said phase separation process for at least as the rigidification takes place. In principle, any compatible polymeric material can be used as duct forming material (12), as far as it can be dissolved either during the phase separation process or in a post processing step with a solvent in which the support layer (3) and the filtration layer (2) are not substantially negatively affected (e.g. completely dissolved). In fact, the support layer (3) and the filtration layer (2) can be soluble in the same solvent the duct forming material (12) is soluble in, but in these circumstances, to allow the filtration layer (2) and the support layer (3) to retain their function, the time in which said solvent is used has to be carefully monitored, so to avoid dissolution of the membrane layer or substantial shape change.

Advantageously the filtration layer (2) comprises an outer layer, hereinafter also referred to as the skin or the skin layer, that comprises pores which determine the perm selectivity of the entire filtration layer (2). The pores of the skin are typically smaller than the pores in the interior of the filtration layer (2). Advantageously, the skin extends to the support layer (3), i.e. the skin forms an edge in contact with the support layer (3), along at least a portion of the circumference of the filtration layer (2). Advantageously, the skin forms an edge in contact with the support layer (3), the edge completely enclosing or surrounding the filtration layer (2) on the support layer (3). It is obtained that the skin seals the filtration layer (2) along the edge(s), so that no additional sealing is required. This skin edge is hence a sealing edge and can be obtained when the membrane is directly cast on the support layer (3) as a polymeric solution.

In accordance with an embodiment of the present invention, the first polymer (10) compound can be an organic binder forming a matrix or lattice of the membrane, in which a hydrophilic filler material can optionally be dispersed. Such filler materials are pore formers which are to be removed prior utilization of the composite membrane according to the present invention. Removal can be performed in a post treatment step, such as by washing in a bleach solution (e.g. for PVP). The filler material may be organic polymer and is advantageously one or a combination of two or more polymers from the group comprising: hydroxypropylcellulose (HPC), carboxymethylcellulose (CMC), polyvinyl pyrrolidone (PVP), cross-linked polyvinyl pyrrolidone (PVPP), polyvinyl alcohol (PVA), polyvinyl acetate (PVAc), polyethylene oxide (PEO), polyethylene glycol (PEG), and glycerol. Preferably, in accordance with an embodiment of the present invention, the filtration layer (2) is provided with pores having a pore size in the range from about 0,5nm to 50µm, preferably about 5nm to 5µm, most preferably about 0,05µm to 0,5µm. Filler materials dispersible within the filtration layer prior use can be an amine, such as but not limited to one or a combination of two or more filter materials from the group comprising: monoethanolamine (MEA), diethanolamine (DEA), polyethylenimine (PEI), aminopropyl-trimethoxysilane and polyethylenimine- trimethoxysilane. The filler material can be an amide or amine containing polymer, such as but not limited to one or a combination of: polyamide (PA), polyurethane (PUR), polyvinylamine (PVArm) and melamine.

In a further embodiment of the present invention, the filtration layer (2) further comprises a hydrophilic filler material (12); advantageously one or a combination of two or more from the group of: hydroxypropylcellulose (HPC), carboxymethylcellulose (CMC), polyvinyl pyrrolidone (PVP), cross-linked polyvinyl pyrrolidone (PVPP), polyvinyl alcohol (PVA), polyvinyl acetate (PVAc), polyethylene oxide (PEO), polyethylene glycol (PEG), and glycerol.

In a further embodiment of the present invention, the filtration layer (2) comprises from about 1%wt to about 15%wt of said hydrophilic filler material (12).

### Support Layer

In accordance with the present invention, the support layer (3) is made from a second polymeric material different from the first polymeric material, wherein the support layer (3) comprises one or more through-holes (4) to allow evacuation of the filtrate, which has been filtrated by the semipermeable filtration layer (2) across the composite filter membrane (1). The support layer (3) provides the intermediate layer (5), which latter is in direct contact with the support layer (3), and the filtration layer (2), with structural support and assures a desired mechanical strength. In other words, the support layer provides structural rigidity and evacuation of the filtrate. In particular, the support layer (3) improves rigidity of the composite filter membrane (2) and thereby reduces the risk to breaking or damaging the intermediate layer (5) and the filtration layer (2). This is particularly important when the composite filter membrane (1) of the present invention is subjected to backwashing.

Said through-holes (4) extend throughout the thickness of the support layer, from one outer surface of the support layer (3) to the opposite outer surface. The through-holes may go through the support layer at an oblique angle, therefore at an angle higher or lower than 90 degrees, but preferably they extend along a direction perpendicular to both surface(s) of the support layer, and therefore pass through the support layer at an angle of about 90 degrees. Where the support layer contains several through-holes, these through-holes are advantageously not connected to each other within the support layer (3). The through-holes (4) may have any cross-sectional shape considered suitable by the skilled person, i.e. they may have the shape of a regular geometric figure and for example be circular, square, polygonal, such as hexagonal, star-shaped or slit- shaped holes, or the through-holes (4) may have any other suitable shape. Preferably however the through-holes (4) have a circular or polygonal cross-section. According to a further preferred embodiment the through-holes (4) advantageously have substantially cylindrical or prismatic shape with axes advantageously perpendicular to the outer surface(s) of the support layer.

The support layer (3) advantageously exhibits an open surface area (OSA) of at least 0,01%. In defining the total area, the peripheral edges of the support layer (3), which may be sealed fluid-tightly, are disregarded. The OSA of the support layer (3) should advantageously be neither too low, because it has to provide for sufficient flux through the support layer (3) faces on the one hand, nor too high in order not to compromise the strength of the support layer (3) on the other hand. A high OSA translates as larger and/or more numerous through-holes (4), which render the support layer (3) less rigid and more prone to bending.

In a further embodiment of the present invention, the support layer (3) has a plurality of through-holes (4) and an open surface area (OSA) in the range from about 0,01% to about 10% of the overall area of the support layer (3), in particular from 0,1% to 5%. In a particular embodiment the support layer (3) consists of PolyCarbonate (PC) or PolyVinylChloride (PVC) and has an OSA in the range from about 0,01% to about 10%, in particular in the range from about 0,1% to 5%. Through-holes (4) sizes range from about 0,1 mm to about 4,0 mm; in particular from about 0,1 mm to about 1,0 mm.

In order to create a sealing perimeter, the support layer (3) is preferably wider than the filtration layer (2).

The support layer (3) may be a monolayer material or it may be a multi-layered structure, wherein consecutive layers can be made of different materials, including non-polymers such as metals. Alternatively, the support layer (3) can be formed of a structure formed of different compounds and having a gradient of one or more compounds across the structure, such that at the outer surface of the support layer (3) forming an interface with the filtration layer (2), and the second polymer (11) compound is present in a sufficient amount to cause sufficiently strong interactions with the first polymer (10) compound.

In accordance with the present invention, the second polymeric material the support layer (3) is made, comprises at least a second polymer. The second polymer (11) compound may be selected from a wide range of compounds and can be polysulfone (PSU), polyethersulfone (PESU), a grafted variant of them, or a copolymer of either one of the polymers. The second polymer (11) compound can be polyvinylidene fluoride (PVDF), polyvinylidene chloride (PVDC), a grafted variant of them, or a copolymer of either one of the polymers. The second polymer (11) compound can be polyvinyl chloride (PVC), chlorinated polyvinyl chloride (CPVC), a grafted variant of them, or a copolymer of either one of the polymers. The second polymer (11) compound can be a polymer of the polyaryletherketone (PAEK) family, such as polyether ether ketone (PEEK), a grafted variant of any of these polymers, such as sulfonated polyether ether ketone (PEEK-WC), or a copolymer of any one of these polymers. The second polymer (11) compound can be polychlorotrifluoroethene (PCTFE), polyether imide (PEI), polyimide (PI), polyamide imide, polyacrylonitrile (PAN), polyurethane (PUR), in particular a thermoplastic polyurethane, a grafted variant of any of these polymers, or a copolymer of any one of these polymers. The second polymer (11) compound can be polyphenylene sulphide (PPS), cellulose acetate (CA), cellulose triacetate (CTA), a grafted variant of any of these polymers, or a copolymer of any of these polymers. The second polymer (11) compound can be: polycarbonate (PC), poly(methyl methacrylate) (PMMA), polyamide (e.g., nylon), polystyrene (PS), acrylonitrile-butadiene-styrene (ABS), polychlorotrifluoroethylene (PCTFE), polybutyrene terephthalate (PBT) and polyphenylene sulphide (PPS), a grafted variant of any of these polymers (such as aminated sulfonated, or acrylated), or a copolymer of any of these polymers. The second polymer (11) compound can be polyethylene (PE), Chlorinated polyethylene (CPE), polypropylene (PP), poly(ethylene terephthalate) (PET), possibly modified by copolymerization such as PET-G (Glycol-modified), amorphous PET (PET-A), or PET-GAG (a multilayer PET-G foil with A-PET core). Combinations of the above indicated compounds can be used as well for making the support layer (3).

Therefore, in accordance with an embodiment of the present invention, the support layer (3) comprises a second polymer (11): the second polymer (11) compound being one or a blend of two or more polymers selected from: polycarbonate, polyester, poly(methyl methacrylate), nylon, polystyrene, acrylonitrile-butadiene-styrene, polychlorotrifluoroethylene, polybutyrene terephthalate, polyethylene, polypropylene, poly(ethylene terephthalate), polysulfone, polyethersulfone, polyvinylidene fluoride, polyvinylidene chloride, chlorinated polyethylene, polyvinyl chloride, chlorinated polyvinyl chloride, polyaryletherketone, polyether ether ketone, sulfonated polyether ether ketone, polychlorotrifluoroethene, polyether imide, polyimide, polyamide imide, polyacrylonitrile, polyurethane, polyphenylene sulphide, cellulose acetate, cellulose triacetate, a grafted variant of any of these polymers, and a copolymer of any of these polymers.

The amount of second polymer (11) compound in the support layer (3) is advantageously at least 5% by weight with respect to the weight of the support layer, advantageously at least 10% by weight, advantageously at least 25% by weight, advantageously at least 35% by weight, advantageously at least 50% by weight. The support layer (3) can comprise reinforcement or filler materials, such as glass fibers, basalt fibers, metal fibers, carbon nanotubes, and glass beads. In accordance with an embodiment of the present invention, the area of the support layer (3) covered by both the intermediate layer (5) and the filtration layer (2) is preferably at least 90%, more preferably at least 99,9% of the available area on the support layer. Although the thickness of the support layer may vary within wide ranges, according to the invention, the support layer (3) has a preferred thickness from about 50 µm to about 1000 µm.

### Intermediate layer

In accordance with the present invention, the intermediate layer (5) is positioned between the support layer (3) and the filtration layer (2). In other words, the intermediate layer (5) is sandwiched between the support layer (3) and the filtration layer (2). The intermediate layer is formed by the dissolution of part or parts of a duct forming material (12), which is covered, preferably fully, by the filtration layer (2). After leaching the duct forming material a series of ducts is formed, which at least partly covers the through-holes (4) of the support layer (3) and provide access thereto. In such a way, the series of ducts formed after the dissolution of the duct forming material is connected to at least one through-hole, thereby allowing a flow of a liquid to pass through the filtration layer (2), the intermediate layer (5) and the support layer (3) via said series of ducts (7). The ducts (7) in the intermediate layer (5) are preferably substantially parallel to the support layer, but can also be present inside the support layer at an angle. Therefore, in accordance with the present invention, the intermediate layer (5) is formed by the at least partial dissolution of a duct forming material (12) sandwiched between the support layer (3) and the filtration layer (2). Therefore, the duct forming material (12) substantially absent from the composite filter membrane (1) according to the present invention, and it is only present prior the membrane is utilized for its intended filtration purpose. In accordance with the present invention, the intermediate layer (5) is made from the first polymer material, which is the same polymer material the filtration layer is made of.

In accordance with an embodiment of the present invention, the combined thickness of the filtration layer (2) thickness and the intermediate layer (5) thickness, is in a range from about 50µm and 1mm. In accordance with an embodiment of the present invention, the intermediate layer has a thickness from about 10% to 90% of the combined thickness of the filtration layer (2) and the intermediate layer (5); in one embodiment from about 20% to about 60% of the combined thickness of the filtration layer (2) and advantageously 33% of said combined thickness.

In an embodiment of the present invention, the intermediate layer (5) lies in a plane parallel to the support layer (3), and covers said support layer (3) at least partially. In a further embodiment of the present invention, a duct of the series of ducts (7) has a diameter from about 10 µm to about 750 µm, advantageously from about 100 µm to about 350 µm. In a further embodiment of the present invention, the series of ducts (7) comprises intersecting ducts (8). Intersecting ducts (8) allow for a distribution of evacuated liquid over the composite membrane and facilitate evacuation of the liquid. Therefore, the ducts (8) of the series of ducts (7) can give access to each other or not, it is nevertheless preferred that they give access to each other. In a further embodiment of the present invention, the ducts (7) are arranged according to a regular geometric pattern (9) selected from: herringbone, checkerboard, and the like. Due to the fact that the series of ducts (7) present within the intermediate layer is obtained by leaching of the duct forming material (12), the pattern of the series of ducts (7) is directly derived from the pattern of the duct forming material (12).

### Duct forming material

In accordance with an embodiment of the present invention, the duct forming material (12) is applied onto the support layer (3) in the shape of a pattern, such as a mesh prior to applying of the filtration layer (2), for example prior to a phase separation process used in applying and manufacturing the filtration layer (2) on top of the support layer (3). In order to permit application of the intermediate layer (5) on desired positions on the support layer (3), the duct forming material (12) is preferably applied using printing techniques.

The duct forming material (12) may not be resistant to the solvent used for rigidifying the filtration layer (2), meaning the first solvent. When contacted with the first solvent the duct forming material (12) will dissolve and may lose its shape after a while to a smaller or larger extent. In order to ensure shape retention of the duct forming material (12) and permit formation of a series of ducts, the contact time with the first solvent is preferably kept as short as possible. The contact time is preferably not longer than 10min, more preferably between 0,1 seconds and 10 minutes.

In a further preferred embodiment of the present invention, the duct forming material (12) covers the support layer (3) with a specific coverage from about 10% to about 75%; in particular from about 20% to about 50% with respect to the surface area of the support layer. Application of the duct forming material (12) can be carried out by means of different techniques, such as (i) screen printing, (ii) single layer print technique (3D-printing), (iii) electrospinning, etc. or any other technique considered suitable by the skilled person.

Screen printing (i) is a printing technique whereby a mesh is used to transfer ink onto a substrate, except in areas made impermeable to the ink by a blocking stencil. A blade or squeegee is moved across the screen to fill the open mesh apertures with ink, and a reverse stroke then causes the screen to touch the substrate momentarily along a line of contact. This causes the ink to wet the substrate and be pulled out of the mesh apertures as the screen springs back after the blade has passed. One colour is printed at a time, so several screens can be used to produce a multi-coloured image or design.

Single layer print technique (ii) is similar to 3D printing, with the difference of building just one layer instead of building multiple layers. By using a fused deposition printing technique, a continuous filament of a thermoplastic material extruded through a nozzle can be deposited as a horizontal plane, or layer. The nozzle can move in three dimensions and movements are computer controlled. In this way a predefined shape can be created.

Electrospinning (iii) is a fiber production method which uses electric force to draw charged threads of polymer solutions or polymer melts up to fiber diameters in the order of some hundred nanometers. Electrospinning shares characteristics of both electro-spraying and conventional solution dry spinning of fibers. The process does not require the use of coagulation chemistry or high temperatures to produce solid threads from solution. This makes the process particularly suited to the production of fibers using large and complex molecules. Electrospinning from molten precursors is also practiced; this method ensures that no solvent can be carried over into the final product.

**Fig. 2** illustrates an example of a duct forming material (12) in accordance with the present invention, wherein the duct forming material is a PVA web, and providing for a 50% specific coverage of the support layer. More specifically, Fig. 2 illustrates a web of PVA providing for a 50% specific coverage of the support layer, having a height of 0,1 mm, a wire width of 1 mm and length of each side of the square of 3,25 mm. The web illustrated in Fig. 2 is not round. The height of the wire is measured for the cross section of the wire, wherein the height is measured along the direction perpendicular to the plane of the support layer, the width is measured along the direction parallel to the support layer. The web is made of PVA so that being water soluble, it can be dissolved in a further step and leave ducts in an intermediate layer sandwiched between the support layer and the filtration layer. PVA dissolves with relatively cold water (25-40 °C).

In case the duct forming material (12) is not soluble in the solvent used for rigidifying the filtration layer (2), the plurality of ducts are obtained in the intermediate layer (5) by exposing the assembled membrane to an appropriate solvent for intermediate layer (5) with leaching of the intermediate layer (5) and yielding a series of ducts (12) disposed in-between the support layer (3) and the filtration layer (2).

The polymer of the duct forming material (12) will in most cases be soluble in the solvent (with which solvent bounding is created), but this is not necessary. The polymer should retain its structure for a long enough time until the filtration layer (2) has reached its solid structure. This is about contact times from seconds to several minutes. The layer of duct forming material (12) provides for a pattern (9) of interconnected ducts in the intermediate layer (5) across the surface of the support layer (3), wherein said pattern (9) is obtained by leaching out the duct forming material (12) after the composite filter membrane (1) is assembled together and the first polymer (10) and the second polymer (11) are bound together.

It follows from the foregoing that the layer of duct forming material (12) is applied across and to part of the surface of the support layer (3). Parts of the surface of the support layer are not covered by the duct forming material, and at these positions the support layer (3) may contact the filtration layer (2) and solvent bounding may be established between these layers. Hence the layer of duct forming material (12) may be applied on the support layer according to a regular geometric pattern (9), such as herringbone pattern or a checkerboard pattern covering from about 10% to 75% of the support layer (3).

In a preferred embodiment, the duct forming material (12) is being formed by the use of interlaced wires having a diameter (if the section of the duct forming material has a round section) or height from about 10 µm to about 750 µm, advantageously from about 100 µm to about 350 µm. The wires do not necessarily have to be round, and can be selected from various shapes, such as, and not limited to: round, oval, rectangular, semi-circular. The layer of duct forming material (12) can be attached to the support layer (3) at the location of said through-holes (4) or by spot welding. It is not required for the intermediate layer (5) to be connected elsewhere to the support layer (3) as the layer of duct forming material (12) will dissolve thereafter.

Advantageously, the duct forming material (12) can be made from the same material as the filler material possibly present in the filtration layer (2). In such way, the simultaneous formation of the pores within the filtration layer (2) and the formation of the intermediate layer (5), comprising the series of ducts (7), can be achieved in a single post-processing step. The duct forming material (12) may be made of an organic polymer and is advantageously one or a combination of: hydroxypropylcellulose (HPC), carboxymethylcellulose (CMC), polyvinyl pyrrolidone (PVP), cross-linked polyvinyl pyrrolidone (PVPP), polyvinyl alcohol (PVA), polyvinyl acetate (PVAc), polyethylene oxide (PEO), polyethylene glycol (PEG), and glycerol.

In order to create a series of ducts (7) which is the most capable at evacuating the phase to be filtered, and therefore to improve flowability, the layer of duct forming material (12) should be applied and cover at least part, and preferably all of the through-holes (4) in the support layer (3). Expressed differently, the layer of duct forming material (12) should be applied and cover at least part, in particular at least 80%, 85%, 90%, 95%, 99% and preferably all of the Open Surface Area of the support layer (3). In this way, when the duct forming material (12) is dissolved, the series of ducts (7) connects with the through-holes (4) onto the support layer (3). In this way, the evacuation of the filtrate through the series of ducts (7) and through the through-holes (4) is achieved with improved flowability. In the manufacturing of the composite filter membrane (1), for example, a gel-like substance forming the duct forming material (12) is applied according to a pattern (9) on the support layer (3) outer surfaces across the through-holes (4) in said support layer (3). The gel-like substance will accordingly penetrate or cover through-holes (4) of the support layer (3). After solidification of the gel-like substance, the layer of duct forming material (12) is formed. The duct forming material can then be covered by the layer of filtration layer forming material.

In accordance with an embodiment of the present invention, the filtration layer (2) is a porous layer of a first polymer (10), and the support layer (3) consists of a sheet of a second polymer (11) comprising usually a plurality of through-holes (4). The first (10) and the second polymer (11) are selected so that polymer entanglement can be obtained. Usually a common solvent for the first (10) and the second polymer (11) is used to at least partly dissolve the first (10) and the second (11) polymer, and therefore allow for a bond formation by polymer entanglement to take place between the first (10) and the second polymer (11).

As mentioned previously, the binding of the intermediate layer (5) to the support layer (3) is realized through solvent bonding. In this process, the superficial layer of the support layer (3) is softened or (at least partially) dissolved by the action of a solvent. Advantageously, the solvent providing for the solvent bonding is the same solvent used in the phase separation process for the manufacturing of the filtration layer (2) (meaning the solvent rigidifying the filtration layer (2) dope). This makes the polymer chains of the support layer (3) mobile enough to interact with polymer chains of the layer of filtration layer forming material. When furthermore the polymer of the layer of filtration layer forming material and the polymer of the support layer (3) are compatible, sufficiently strong molecular interactions can be achieved, such as but not limited to a (partial) interpenetration and entanglement between the chains of the two polymers, which occurs at the interface between the layer of filtration layer forming material and the support layer (3). Surprisingly, when phase separation is carried out to rigidify the filtration layer (2) dope, these molecular interactions do not disappear, but are made permanent, resulting in strong bonds.

In order to obtain bonding between the support layer (3) and the intermediate layer (5), it will be appreciated that the intermediate layer (5) and the support layer (3) need to share an interface in which the first polymer (10) compound (comprised in the filtration layer (2) and the layer of filtration layer forming material) can interact at molecular level with the support layer (3). Hence, at least an outer surface layer of the support layer (3) forming an interface with the formed intermediate layer (5), and possibly the entire support layer (3), comprises or consists of a second polymer (11) compound which can interact with the first polymer (10) of the filtration layer (2)/layer of filtration layer forming material/intermediate layer (5). Both the first polymer (10) compound and the second polymer (11) compound need to be present at the interface and furthermore the first (10) and second polymer (11) compounds are to be compatible, e.g. they have similar Hildebrand solubility parameters, for interaction to occur between the first (10) and the second polymer (11). Due to molecular mobility and the interaction between first (10) and second polymer (11), advantageously, the polymer chains of the first polymer (10) compound penetrate into and/or entangle with the polymer chains of the second polymer (11) compound at the interface between intermediate layer (5) and support layer (3).

In a second aspect, the present invention provides for a method of manufacturing a composite filter membrane (1) defined in accordance with the present invention, comprising the following subsequent steps of:
(a) providing a support layer (3) having at least one through-hole (4); (b) providing a layer of duct forming material (12) on said support layer (3) in a configuration partially covering the overall surface of the support layer (3) and at least covering the at least one through-hole (4) of said support layer (3); (c) providing a layer of filtration layer forming material, over the layer of duct forming material (12), thereby covering the duct forming material (12) provided at step (b); (d) solvent bonding, by means of a first solvent, the support layer (3) and the layer of filtration layer forming material causing adhesion of said support layer (3) to said layer of filtration layer forming material, thereby forming a filtration layer (2); and (e) dissolving, at least partially, by means of a second solvent, the duct forming material (12) provided at step (b) thereby forming an intermediate layer (5) having a series of ducts (7).

In accordance with an embodiment of the present invention, step (b) comprises the steps: (c1) providing a filtration layer (2) dope over the layer of duct forming material (12); (c2) rigidifying the filtration layer (2) dope provided at step (c1) by means of a third solvent, thereby providing the filtration layer (2).

In accordance with an embodiment of the present invention, the method further comprises
(c) providing a layer of filtration layer forming material comprising a filler material, the filler material preferably selected from one or a combination of: hydroxypropylcellulose (HPC), carboxymethylcellulose (CMC), polyvinyl pyrrolidone (PVP), cross-linked polyvinyl pyrrolidone (PVPP), polyvinyl alcohol (PVA), polyvinyl acetate (PVAc), polyethylene oxide (PEO), polyethylene glycol (PEG), and glycerol.
(f) dissolving, by means of a fourth solvent, the filler material comprised in the filtration layer (2).

In accordance with an embodiment of the present invention, the method further comprises that steps (d) and (e), are performed contemporary by means of a common solvent or mixture of solvents, meaning the first solvent and the second solvent are the same. In accordance with a further embodiment of the present invention, the method further comprises that steps (e) and (f), are performed by means of a common solvent or mixture of solvents, meaning the second solvent and the fourth solvent are the same.

In accordance with an embodiment of the present invention, the method further comprises that at step (a) the layer of duct forming material (12) is provided to cover the support layer (3) with a specific coverage of the support layer from about 10% to about 75%; in particular from about 20% to about 50%.

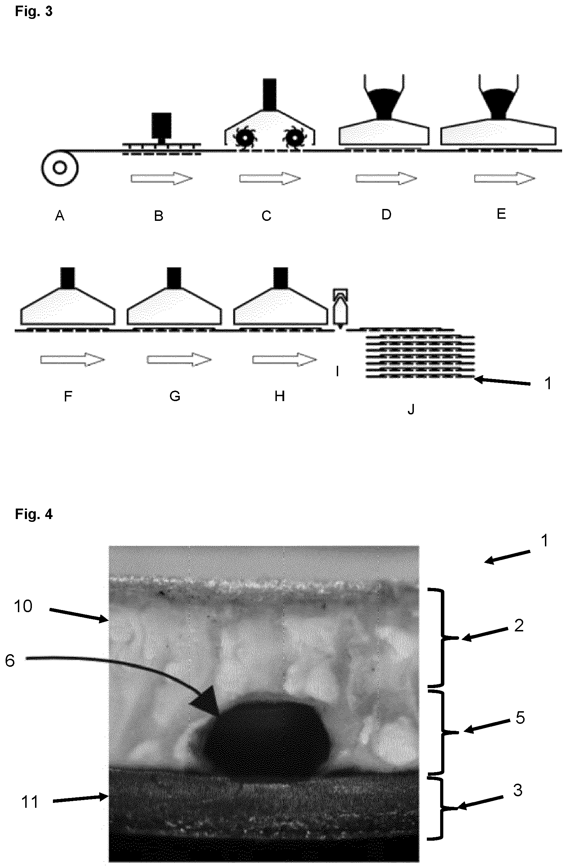

**Fig. 3** illustrates a sequence of steps allowing for the manufacturing in a roll-to-plate production line of composite filter membranes (1) in accordance with the present invention. Here below, at steps A to J, a general method for the manufacturing of composite filter membranes (1) according to the present invention is described. For example, and not limiting to, the series of steps can comprises the following subsequent steps: step A, unrolling an untreated supporting material; step B, perforating the untreated supporting material providing through-holes; step C, cleaning the perforated supporting material, thereby obtaining a usable support layer; step D, applying a layer of duct forming material on top of the support layer; step E, applying a layer of filtration layer forming material e.g. a filtration layer dope; step F, wash; step G, post treatment; step H, conditioning and drying; step I, cutting the composite filter membrane obtained; step J, stacking the composite filter membranes obtained. In steps described in Fig. 3 can differ, based for example on the technique of formation of the filtration layer e.g. if no filtration layer dope is required, and a filtration layer can be directly deposed on the layer of duct forming material or if for example there is no need for a post treatment step. The steps listed above are here below described more in detail.

### - STEP A: UNROLLING

A coil with untreated supporting material will be placed horizontally in such a way the axe of the coil is perpendicular to the production direction. The process is usually referred as "uncoiling" and can be extended with an accumulator. An accumulator can be implemented when the coil must be changed without stopping the production. The equipment for uncoiling and positioning a coil is well known in all kinds of manufacturing industries.

### - STEP B: PERFORATING

The sheet material will be provided with through-holes (4) to evacuate the filtered water. The through-holes (4) are preferably circular with a diameter of e.g. 1mm. They are preferably be positioned at a well-defined distance from each other in a pitch pattern. The most obvious patterns are square, triangular or rectangular. Other patterns are possible as well. The through-holes (4) does not necessarily have to be round, they can for example be rectangular in shape, triangular, oval ... Not the entire surface has to be perforated. Defined margins (not perforated material) will be left surrounding the perforated area.

Different techniques can be provided to create the through-holes (4). The most common technique to perforate sheet material is "die cutting". For small surfaces a flatbed perforation machine is suitable. If the surface increases, a rotary perforation machine must be considered.

### - STEP C: CLEANING

A cleaning step must be performed to remove dust and remnants of the perforation process. This can be done with a high air flow or dust cleaner. Also degreasing the film material cannot be ignored. The adhesion of the filtration layer (2) will not be efficient enough if degreasing is not properly done. On the other hand, if the perforation step is performed without adding lubricant, the degreasing step can be simplified. The degreasing could be done at production site by the supplier of the material. For example, as decreasing agent EtOH or Isopropyl alcohol can be used. For high volume usage, other industrial agents can be more appropriate.

### - STEP D: APPLYING LAYER OF DUCT FORMING MATERIAL

The present step D describes a particular embodiment of a first step of the manufacturing of a composite filter membrane (1) in accordance with the present invention, wherein the step (a) of providing a layer of duct forming material (12) on the support layer (3) in a configuration partially covering the overall surface of the support layer (3) and at least covering the at least one through-hole (4) present in said support layer (3), is performed. The layer of duct forming material (12) must be applied to the support layer (3) in such a way that they are positioned and immobile to each other. This layer of duct forming material (12) is sacrificial because it will be removed in the production process after the layer of filtration layer forming material is cast and solidified (in case the layer of filtration layer forming material is a filtration layer dope), or after a prefabricated filtration layer is deposed on the support layer. After removal of the duct forming material (12), the ducts (6) will be exposed. The selection of the material of the layer of duct forming material (12) depends on the ability of said material to create fine wires that are connected to each other and keep their shape when casted over with for example a filtration layer dope (also referred to as membrane dope), and in the solidification process of said filtration layer dope. The layer of duct forming material (12) can be applied through coating or through laminating as a pre-made mesh material. The screen-printing process could be an interesting industrial process to use for coating the layer of duct forming material (12), by using a liquid solution that could spread out in a checker pattern manner over the support layer (3) surface. More than one layer can be applied by run the process several times to create the required height. The liquid solution must be viscous to avoid that it is flowing out and loses its shape. The viscosity must increase to a nearly solid state before the next step in the production (coating process of the filtration layer (2)) takes place. In this case, an additional step (e.g. UV-curing or evaporation trough heat) is most likely to be performed. Further, for example a 3D printing technique can be used to create the layer of duct forming material (12). By run a polymer filament trough a heated extrusion nozzle, the polymer will meld and reshaped to a thinner filament that can be dispositioned on the supported layer. By moving the extruder in a particular path, a mesh-like pattern will be created. The intermediate layer (5) which is obtained by leaching out the layer of duct forming material (12), may be organic and is advantageously one or a combination of: hydroxypropylcellulose (HPC), carboxymethylcellulose (CMC), polyvinyl pyrrolidone (PVP), cross-linked polyvinyl pyrrolidone (PVPP), polyvinyl alcohol (PVA), polyvinyl acetate (PVAc), polyethylene oxide (PEO), polyethylene glycol (PEG), and glycerol. The layer of duct forming material (12), which is usually in the form of a mesh, can also be removed after the composite filter membrane (1) is assembled, such as by washing in an aqueous solution (e.g. for PVP). The removal of the polymer leaves a series of ducts (7) in the intermediate layer (5).

### - STEP E: APPLYING FILTRATION LAYER

The present step describes a particular embodiment of a second step of the manufacturing of a composite filter membrane (1) in accordance with the present invention, wherein the step (b) of providing a layer of filtration layer forming material over the layer of duct forming material (12), is performed. The filtration layer (2), obtained from the layer of filtration layer forming material, is a porous or non-porous polymeric layer. It allows some things to pass through but stops others. Such things may be molecules, ions, or small particles. The layer of filtration layer forming material (2) can be a thermodynamically stable polymer solution, in other words afiltration layer dope, or provided already rigidified. Different techniques can be used to create the filtration layer (2) in the final composition filter membrane. Each technique requires a specific polymer composition and thereby will have another outcome (pore size, chemical stability, etc....). For example, for the creation of a porous membrane that is suitable for the MBR (membrane bio reactor) application, the pore sizes are preferably in the range of 0,03µm to 0,3 µm. The filtration layer dope that can be used is a developed composition based on PVDF polymer dissolved in NMP. Additional PVP can be added as filler material. Through liquid-liquid extraction the filtration layer dope solidifies when it will be immersed in a non-solvent (H₂O). This procedure creates an asymmetric structure of pores through the thickness of the filtration layer (2). The smallest pores are on the outside of the formed filtration layer (2) (highest solvent-nonsolvent gradient at first contact) and creates a thin skin layer. Bigger pores are formed in the sub structure of the filtration layer (2). Therefore, in a further embodiment in accordance with the present invention, the step of providing the filtration layer (2) over the layer of duct forming material (12) comprises (c1) providing a filtration layer (2) dope over the layer of duct forming material (12); (c2) rigidifying the filtration layer (2) dope at step (c1) by means of a third solvent, thereby providing the filtration layer (2). In accordance with an embodiment of the present invention, the filtration layer (2) is coated onto the layer of duct forming material (12), which is on top of the support layer (3). The thickness of the applied layer must be thicker than the thickness of the layer of duct forming material (12) to avoid defects of the membrane skin layer afterwards. The open areas of the layer of duct forming material (12) will be filled with a filtration layer dope as well. To solidify the filtration layer dope, the structure will be immersed in water which acts as a non-solvent. A minimum residence time is required to dilute the solvent in the membrane structure. The filtration layer (2) will be mostly solidified for the next process step to begin. The solvent, present in the filtration layer (2) dope, will become in contact with the support layer (3) and dissolve the surface partially. At that point polymer entanglement will occur. Achieving polymer entanglement is important for the support layer (3) to adhere to the filtration layer (2), such that the composite filter membrane (1) according to the present invention can be backwashed. Without sufficiently strong adhesion of the support layer (3) to the filtration layer (2), the pressure exerted by air or a liquid during backwashing would likely result in the detachment of the filtration layer (2) from the support layer (3). This binding between the filtration layer and the support layer will only be possible when the combination of used materials is well chosen. More specifically, the materials making up the layer of filtration layer forming material and the support layer are chosen by their being softened or at least partially dissolved by action of a common solvent, that for example might be used in the filtration layer dope solution. By exposure of both the support layer (3) and the layer of filtration layer forming material to such common solvent, there will be a strong bond between the thereby formed filtration layer (2) and the support layer (3) by polymer entanglement. Said common solvent is usually an aprotic solvent, such as N-methyl-2-pyrrolidone (NMP), N-ethyl-2-pyrrolidone (NEP), dimethylformamide (DMF), dimethylsulfoxide (DMSO) and dimethylacetate (DMAc). Such binding can be achieved with a support layer consisting of PolyCarbonate (PC) or PolyVinylChloride (PVC) and a filtration layer dope consisting of Polyvinylideenfluoride (PVDF) and N-methylpyrrolidon (NMP) or N-Ethylpyrrolidone (NEP). Further, the materials making up the layer of duct forming material (12) e.g. water-soluble polymeric material, should be such that the layer of duct forming material (12) is not rapidly dissolved by the common solvent used in the binding of the layer of filtration layer forming material (2) to the support layer (3) through polymer entanglement. In case the layer of filtration layer forming material can be dissolved by the common solvent, it is required to fine-tune the process so that the common solvent allows for the ducts (6) formed by the dissolution of the layer of duct forming material (12) to retain their shape. The present step describes a particular embodiment of a fourth step of the manufacturing of a composite filter membrane (1) in accordance with the present invention, wherein the step (e) of dissolving, at least partially, the layer of duct forming material (12) thereby forming an intermediate layer (5) having a series of ducts (7), is provided. Depending on the polymer used for the duct forming material (12), it could be that the layer of duct forming material (12) is already fully/partially dissolved after this process step. If PVA with low hydrolysis is used, it will be definitely the case. On the other hand, if PVP is used for the layer of duct forming material (12), it will have to be removed in a later production step e.g. at step G.

### - STEP F: WASHING

The washing step will rinse out all the remaining solvent from the obtained filtration layer (2). This step is an extension of the previous step. The washing step could be done with the same solvent as the solvent used to solidifying the filtration layer dope, meaning the non-solvent to the filtration layer dope, if a filtration layer dope has been used. Further, it has been seen that a higher temperature and convection will speed up the process.

### - STEP G: POST TREATMENT

Post treatment is an additional washing step to remove additives such as PVP out of the filtration layer (2). Typically, hypochlorite (NaOCI) is used to oxidise the PVP and causes chain scission. This way the remain PVP can be washed out easily. A slightly increased temperature can be beneficial to decrease the residence time. At this point the duct forming material (12) can also be washed out if it is not already dissolved in an earlier production step. Therefore, in a further embodiment in accordance with the present invention, the method further comprises:
(f) dissolving a filler material comprised in the filtration layer (2).

### - STEP H: CONDITIONING AND DRYING

In most cases the composite filter membrane (1) will be dried before transportation and/or storing. The drying the composite filter membrane (1) must be carried out in a controlled way. If not done well, the pores in the filtration layer (2) could collapse and after rewetting less pores will be active. Also dried non-collapsed pores can be hard to rewet. Smaller pores will need high liquid entry pressures that exceeds the max allowed pressure. Especially when the filtration layer (2) material is mild or non-hydrophilic. To avoid the drawbacks identified above, the composite filter membrane (1) has to be conditioned. Conditioning the composite filter membrane (1) means that composite filter membrane (1) will be immersed in a warm water bath with high content (up to 30%) of glycerol in water for a period of time. The pores must be filled with this high concentrated glycerol solution before drying can take place. Drying can be done by heated air circulating over the composite filter membrane (1) surface. While the water contend evaporates, the glycerol concentration increases. Especially the small pores will be filled with a gel- like glycerol substance and will remain after most of the water is evaporated. When one wants to rewet the composite filter membrane (1), immersing the membrane in water will dissolve the glycerol and then can easily be washed out.

### - STEP I: CUTTING

The composite filter membrane (1) sheets will be cut in a specific width and length to prepare for stacking and/or packaging. A minimum margin around the composite filter membranes (1) must be kept for later handling purposes. Cutting can easily been done with a die cross cutting machine.

### - STEP J: STACKING

To store the composite filter membrane (1) sheets in a space-saving manner, stacking is recommended. The composite filter membrane (1) surface is fragile and must be handled with care. A protected film material between every sheet is a necessary precaution. For stacking and/or packaging the composite filter membranes (1) are a plurality of machines available on the market. In a third aspect, the present invention relates to the use of the composite filter membrane (1) as defined by its embodiments. For example, the composite filter membrane (1) can be used in different fields of technologies and for different purposes, as a filtration composite membrane. Composite filter membrane (1) in accordance with the present invention are particular suitable to be used in microfiltration or ultrafiltration processes. Further, composite filter membrane (1) of the present invention are particularly suitable as filtration membranes in industrial wastewater treatment more specifically as membranes for membrane bio reactors (MBR). Further, composite filter membranes (1) according to the present invention are particularly useful as filtration membranes which can be backwashed.

### EXPERIMENTAL PART

The manufacturing of the composite filter membrane (1) depicted in Fig. 4 is described in Example 1.

**Fig. 4** illustrates a cross section of a composite filter membrane in accordance with the present invention, wherein the composite filter membrane (1) comprises a filtration layer (2) at the top of the figure; a support layer (3) at the bottom of the figure; and an intermediate layer (5) sandwiched between said filtration layer (2) and said support layer (3); wherein said intermediate layer (5) is solvent bonded to said support layer (3), and is provided with a visible duct (6) at the center of the figure. Said duct (6) allows for evacuation of a e.g. a liquid through the duct (6) and then through the at least one through-hole (4) of the support layer (3). The through-hole (4) is not visible in Fig 4 due to how the cross section of the composite filter membrane (1) was taken. The composite filter membrane (1) illustrated in Fig. 4 has been made from the following materials: support layer (3), PVC; filtration layer (2), filtration layer dope is based on a PVDF/NMP mixture with PVP as a filler material; layer of duct forming material (12), filament of partially hydrolysed PVA. Described in Example 1 is the detailed manufacturing of the composite filter membrane (1) shown in Fig. 4.

### EXAMPLE 1

The manufacturing of the composite filter membrane (1) shown in Fig. 4. Comprises the present steps: preparing the support layer (3), applying the layer of duct forming material (12), applying the layer of filtration layer forming material (in the present case a filtration layer dope) and rigidifying it, washing out remaining solvents, post treating, conditioning and drying.

### - PREPARING THE SUPPORT LAYER

In Example 1, Polyvinyl Chloride (PVC) was selected as material for the support layer (3). PVC is one of the most commonly used thermoplastic polymers in the world. It is widely available in two broad categories: rigid and flexible. In our development we chose the rigid version. It is available on a coil and still flexibility enough to easily be unrolled. The material is transparent. The thickness is 300µm. Sheets were cut to the dimensions of 210mm in width and 297mm in length.

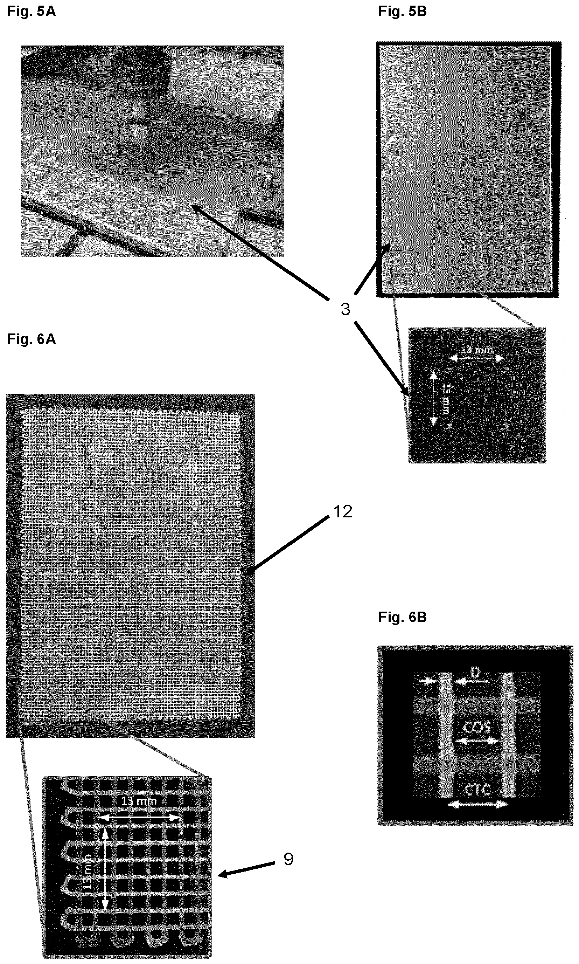

**Fig. 5A** illustrates the drilling of the support layer (3) of the composite filter membrane (1) shown in **Fig. 4****.** For creating the through-holes (4), drilling was the preferred choice. A square pitch pattern was chosen with a 13 mm pitch and a through-hole (4) diameter of 1,0 mm see Figure 5B. Margins of a few cm were left at the edges. This results in a total of 280 through-holes (4) to be drilled.

**Fig. 5B** illustrates the support layer (3) of the composite filter membrane (1) shown in **Fig. 4****,** wherein each adjacent through-hole (4) is equidistant and displaced on said support layer (3) according to a said square pitch pattern. A zoom in of said through-holes (4) is provided.

The obtained support layer (3) sheets were placed in a pile of five on a CNC drilling machine and pressed down with an aluminium plate of 3 mm thick. The plate has the same width and length dimensions as the PVC sheets and was pre-drilled with through-holes (4) of 1,5 mm in diameter.

### - APPLYING THE LAYER OF DUCT FORMING MATERIAL

A 3D-printer was used to apply the duct forming material (12) onto the perforated support layer (3). A filament of partially hydrolysed PVA was used. This type of filament is typically engineered to dissolve in water at room temperature. The positioning of the support layer (3) must be securely done to ensure that the through-holes (4) are covered with a printed filament. After a few printing trials a layer thickness of about 0,5 mm could be achieved.

**Fig. 6A** illustrates the layer of duct forming material (12) utilized for the formation of ducts (6) in the composite filter membrane (1) shown in **Fig. 4****,** wherein the duct forming material (12) is a PVA web providing for a 35% specific coverage of the support layer (3), with full overlay of all the trough-holes (4) in the support layer (3) as evident from the shown in Fig. 6B. A zoom in of the web is provided. The web has a height of 0,5 mm, a width of 0,5 mm and length of each side of the square of 2,6 mm. The web is made of PVA so that being water soluble, it can be dissolved in a further step and leave channels in an intermediate layer (5) sandwiched between the support layer (3) and the filtration layer (2).

**Fig. 6B** illustrates a further zoom in of the zoom in depicted in the lower part of **Fig. 6A. Fig. 6B** illustrates the checker-pattern of the PVA material. The shape of the layer of duct forming material (12) can be described as mesh-like. The checker-pattern dimensions are 0,5 mm as the wire diameter (D), 2,6 mm centre-to-centre (CTC) distance of wires and a clear opening size (COS) of 2,1 mm.

### - APPLYING THE LAYER OF FILTRATION LAYER FORMING MATERIAL AND RIGIDIFICATION

The filtration layer dope was pre-made at a membrane factory. The dope is based on a PVDF/NMP mixture with PVP as a filler material. Before use the dope was heated to 40°C in a hot-air oven. Casting was done on an Elcometer 4340 motorised film applicator with a doctor-blade. Thickness was set to 1,0 mm (is wet thickness before solidification). During the coating process the humidity of the ambient air must be as low as possible to avoid early skin formation. Therefore, the applicator is placed in a low humidity compartment. When the casting process was done, the obtained composite filter membrane (1) sheet was transferred to a second compartment were the membrane was held above a warm 40°C water bath. The filtration layer dope was facing downwards. This way the water vapor can reach the surface of the filtration layer dope and the first skin pores are formed. After 20 seconds the composite filter membrane (1) sheet was immersed in the warm 40°C water bath. At this point the solidification is being completed. The composite filter membrane (1) sheet was left in the hot water bath for several hours to ensure that the filtration layer (2) is fully formed.

### - WASHING OUT REMAINING SOLVENTS

During solidification of the filtration layer dope, solvents of the filtration layer dope will dilute in the water bath. In the washing step the solvent/water mixture was replaced with clean water.

### - EVALUATING THE OBTAINED PRODUCT

At this point, samples were taken from the obtained composite filter membrane (1) sheet. Surprisingly the layer of duct forming material (12) was already dissolved, and an open duct had arisen. To summarise the findings, the PVA material, used for the layer of duct forming material (12) was completely dissolved after the washing step, the dimensions of the open duct (6) in the formed intermediate layer were close to de dimensions of the wire diameter of the layer of duct forming material (12), noted in Fig. 6B. Further, the intermediate layer (5) had a strong bonding with the support layer (3) when tried to peel-off the intermediate layer (5) from the layer below. When the intermediate layer (5) was torn in two, remains were still attached to the support layer (3), meaning that addition forces of the polymer entanglement were stronger present then cohesion forces of the intermediate layer (5). Further, the duct (6) that was exposed was fully covered with the filtration layer (2) so that skin layer defects do not occur.

### - POST TREATING

At this point, the pores of the filtration layer (2) are still filled with PVP polymer. A post treatment step is required to open the pores to ensure that water flow can take place. The procedure is as follows: Prepare a warm 45°C water bath. Add hypochlorite (NaOCI) until 2000ppm is reached. Add HCI for lowering the pH to pH 8,0. Immerge the composite filter membrane (1) sheet in the solution for minimum 0,75 hour and maximum 4 hours. Rinse the membrane with warm fresh water at least 3 times.

### - CONDITIONING AND DRYING

After de post treatment the pores are filled with water. If a dry composite filter membrane (1) is required, a conditioning and drying step must be performed. The procedure is as followed.
1. Prepare a warm 50°C water/glycerol mixture. The concentration must be higher than 20% and lower than 50%. At too low concentration the possibility exists that the remaining glycerol after drying is not enough to fill all the pores. When the concentration of glycerol is too high, the viscosity will be too high as well. This high viscosity will have a negative impact on the mixing ability with the present fresh water in the smallest pores.
2. Immerge the membrane sheets into the water/glycerol mixture. It is highly recommended to use convection during the residence time. This will enhance the mixture penetration into the pores. This can be done with an aerator.
3. After 16 hours, the membrane sheet can be taken out of the water/glycerol mixture. Now the draying step can take place. An air fan can be placed in such a way that the air flows over the surface of the membrane. After 24 to 48 hours, depending on the humidity of the ambient air, the membrane should be dry and ready to stock. The air can be heated to improve the drying procedure.

Table 1 here below illustrates combinations of support layer (3) material, filtration layer (2) material, binding solvent, duct forming material (12) and solvent dissolving the layer of duct forming material (12), which are suitable for carrying out the invention. Further combinations of materials and solvent will be clear for the skilled in the art, based on the teaching provided in the present description of the invention. Further examples in accordance with the present invention are provided in Table 1. As examples of support materials, polyvinylchloride (PVC) and polycorbonate (PC) were investigated. These two materials in combination with the bounding solvent NMP or NEP gives a good attachment of the membrane layer to the support layer (3). As a duct forming material (12), polyvinylalcohol (PVA) will slowly dissolve in NMP, as well as in NEP and will be mostly dissolve after the rinsing step in H₂O. Polyvinylpyrolidone (PVP) will dissolve even slower in NMP (or NEP) and has to be removed in an NaOCI posttreatment step.

**Table 1**

| | Material of the Support layer (3) | Material of the Filtration layer (2) | Binding Solvent (first solvent) | Duct forming material (12) | Solvent dissolving the duct forming material (12) (second solvent) |
|---|---|---|---|---|---|
| Example 1 | PVC | PVDF | NMP; NEP | PVA | H₂O |
| Example 2 | PVC | PES | NMP; NEP | PVA | H₂O |
| Example 3 | PVC | PVDF | NMP; NEP | PVP | NaOCI |
| Example 4 | PC | PVDF | NMP; NEP | PVA | H₂O |
| Example 5 | PC | PES | NMP; NEP | PVA | H₂O |
| Example 6 | PC | PVDF | NMP; NEP | PVP | NaOCI |

### Legend

1 Composite filter membrane, 2 Filtration layer, 3 Support layer, 4 Through-hole, 5 Intermediate layer, 6 Duct, 7 Series of ducts, 8 Intersecting ducts, 9 Pattern, 10 First polymer, 11 Second polymer, 12 Duct forming material.

## Claims

1. A composite filter membrane (1) comprising:
- a filtration layer (2) made from a semipermeable first polymeric material;
- a support layer (3) made from a second polymeric material different from the first polymeric material, and comprising at least one through-hole (4); and
- an intermediate layer (5),
wherein the intermediate layer (5);
- is made from the first polymeric material and sandwiched between the filtration layer (2) and the support layer (3),
- is solvent bonded to the support layer (3), and
- is provided with a series of ducts (7) connected to the at least one through-hole (4) of the support layer (3) and wherein said series of ducts (7) is configured for evacuation of a liquid flow, passing through the filtration layer (2) and the intermediate layer (5), through said at least one through-hole (4) of the support layer (3).

2. The composite filter membrane (1) according to any one of the previous claims, wherein the support layer (3) has a plurality of through-holes (4) with an open surface area (OSA) in the range from about 0,01% to about 10% of the overall area of the support layer (3), in particular from 0,1% to 5%.

3. The composite filter membrane (1) according to any one of the previous claims, wherein a duct (6) of the series of ducts (7) has a diameter of the circular cross section of a duct from about 10 µm to about 750 µm, particularly from about 50 µm to about 500 µm, more particularly from about 100 µm to about 350 µm.

4. The composite filter membrane (1) according to any one of the previous claims, wherein the intermediate layer is fully covered by the filtration layer (2).

5. The composite filter membrane (1) according to any one of the previous claims, wherein the filtration layer (2) and the intermediate layer (5) have a combined thickness in a range from about 50µm and 1mm.

6. The composite filter membrane (1) according to any one of the previous claims, wherein the series of ducts (7) comprises intersecting ducts (8).

7. A method of manufacturing a composite filter membrane (1) as provided in claim 1, comprising the following subsequent steps of:
(a) providing a support layer (3) having at least one through-hole (4);
(b) providing a layer of duct forming material (12) on said support layer (3) in a configuration partially covering the overall surface of said support layer (3) and at least covering the at least one through-hole (4) of said support layer (3);
(c) providing a layer of filtration layer forming material, over the layer of duct forming material (12) provided at step (b);
(d) solvent bonding, by means of a first solvent, the support layer (3) provided at step (a) and the layer of filtration layer forming material provided at step (c) causing adhesion of said support layer (3) to said layer of filtration layer forming material, thereby forming a filtration layer (2); and
(e) dissolving, at least partially, by means of a second solvent, the duct forming material (12) provided at step (b) thereby forming an intermediate layer (5) having a series of ducts (7).

8. The method of manufacturing according to claim 7, wherein step (c) comprises the steps:
(c1) providing a filtration layer (2) dope over the layer of duct forming material (12);
(c2) rigidifying the filtration layer (2) dope provided at step (c1) by means of a third solvent, thereby providing the filtration layer (2).

9. The method of manufacturing according to claim 8, wherein at step (c1) the filtration layer (2) dope comprises a ratio of polymer content to solvent content of at least 0,15 by weight, advantageously at least 0,20 by weight, advantageously at least 0,25 by weight and advantageously not exceeding 0,50 by weight.

10. The method according to any one of claims 7 to 9, wherein at step (b), the layer of duct forming material (12) is provided with a regular geometric pattern (9), such as herringbone pattern or a checkerboard pattern, covering from about 10% to 75% of the support layer (3).

11. The method of manufacturing according to claims 7 to 10, wherein the method comprises
(c) providing a layer of filtration layer forming material comprising a filler material, the filler material preferably selected from one or a combination of: hydroxypropylcellulose (HPC), carboxymethylcellulose (CMC), polyvinyl pyrrolidone (PVP), cross-linked polyvinyl pyrrolidone (PVPP), polyvinyl alcohol (PVA), polyvinyl acetate (PVAc), polyethylene oxide (PEO), polyethylene glycol (PEG), and glycerol;
(f) dissolving, by means of a fourth solvent, the filler material comprised in the filtration layer (2).

12. The method of manufacturing according to any one of claims 7 to 11, wherein steps (d) and (e), are performed contemporary by means of a common solvent or mixture of solvents, meaning the first solvent and the second solvent are the same.

13. The method of manufacturing according to claim 11, wherein steps (e) and (f), are performed by means of a common solvent or mixture of solvents, meaning the second solvent and the fourth solvent are the same.

14. The method of manufacturing according to any one of claims 7 to 13, wherein at step (b) the layer of duct forming material (12) is provided to cover the support layer (3) with a specific coverage of the support layer from about 10% to about 75%; in particular from about 20% to about 50%.

15. The use of the composite filter membrane (1) as defined in any one of claims 1 to 6, as a filtration membrane in the wastewater treatment industry, preferably as membrane in an MBR (Membrane Bioreactor).
